# EUROPÄISCHE PATENTSCHRIFT

(11) **EP 0 797 402 B1**
(45) Veröffentlichungstag und Bekanntmachung des Hinweises auf die Patenterteilung: **08.07.1998**
(21) Anmeldenummer: 95937880.3
(22) Anmeldetag: 08.11.1995
(51) Int. Cl.: A47J 36/02

(54) **VERFAHREN ZUR AUSSTATTUNG EINES GESCHIRRGEGENSTANDES MIT EINER ANTIHAFTBESCHICHTUNG**
METHOD OF PRODUCING A KITCHEN UTENSIL PROVIDED WITH A NONSTICK COATING
PROCEDE DE PRODUCTION D'UN USTENSILE DE CUISINE POURVU D'UN REVETEMENT ANTI-ADHESIF

(30) Priorität: 16.12.1994 DE 4445007
(43) Veröffentlichungstag der Anmeldung: 01.10.1997
(73) Patentinhaber: FISSLER GMBH, 55743 Idar-Oberstein (DE)
(72) Erfinder: DORFSCHMIDT, Klaus, D-55776 Frauenberg (DE)
(74) Vertreter: KEIL & SCHAAFHAUSEN Patentanwälte
(86) Internationale Anmeldenummer: EP9504389
(87) Internationale Veröffentlichungsnummer: WO9618333

(56) Entgegenhaltungen:
- GB-A- 719 383
- GB-A- 1 069 168

## Beschreibung

Die Erfindung bezieht sich auf ein Verfahren zur Ausstattung eines Geschirrgegenstandes, z.B. einer Pfanne, eines Topfes oder dgl., aus Metall, z.B. Aluminium, einer Aluminiumlegierung, Magnesium oder einer Magnesiumlegierung und/oder Kupferlegierung, mit einem Antihaftbeschichtungssystem in den beanspruchten Oberflächenbereichen, z.B. auf der Innenseite, welches, z.B. nach einem Aufrauhen, eine Hartstoffschicht wie eine Hartanodisationsschicht oder dergleichen Anodisationsschicht, und eine Antihaftschicht, z.B. aus einem Fluorkohlenstoffharz, wie Polytretafluoräthylen (PTFE), Tetrafluoräthylen-Hexafluorpropylen-Kopolymer (FEP) oder Tetrafluoräthylen-Äthylen-Kopolymer (ETFE) aufweist, indem man vor dem Vorsehen der Hartstoffschicht eine Oberflächenschicht auf die nicht mit dem Antihaftbeschichtungssystem zu versehenden Oberflächenbereiche des Geschirrgegenstandes aufbringt und dann die Hartstoffschicht als anodisch erzeugte Konversionsschicht vorsieht.

Ein solches Verfahren ist aus der GB-A-1 069 168 bekannt. Aus dieser ergibt sich, daß bei der Herstellung einer Probepfanne zunächst in einem Teilbereich des Pfannenkörpers ein Schutzüberzug vorgesehen wird, während der freiliegende Metalloberflächenbereich mit einer Oxydzwischenschicht versehen wird. Von dieser Oxydzwischenschicht wird dann ebenfalls zu Demonstrationszwecken wiederum ein Teilbereich mit einem Schutzüberzug versehen, während die freiliegende Oxydzwischenschicht mit einer zusätzlichen Harzschicht versehen wird. Nach Abziehen der beiden Schutzüberzüge können dabei die unterschiedlichen Oberflächenbeschaffenheiten der unbehandelten Metalloberfläche, der lediglich mit einer Oxydzwischenschicht versehenen Metalloberfläche und der zusätzlich mit einer Harzschicht versehenen glatten Oberfläche demonstriert werden.

Nach einem aus der DE-B-1 546 934 und der EP-A-0 424 072 bekannten Verfahren werden Geschirrgegenstände, wie Pfannen, Töpfe, Bräter oder dgl. u.a. zur Erhöhung der Kratz- und Verschleißbeständigkeit auf ihrer beanspruchten Innenseite mit Hartstoffschichten in Kombination mit Antihaftschichten versehen. Eine Möglichkeit der Aufbringung einer Hartstoffschicht bei Aluminium- bzw. Magnesiumlegierungen ist die anodische Oxidation entsprechend der DE-A-3 244 217. Dazu muß in der Regel das zu anodisierende Objekt elektrisch kontaktiert in ein saures Elektrolytbad getaucht und anschließend in dem Stromfluß mit einer Konversionsschicht beschichtet werden. Hierbei wird der gesamte Gegenstand sowohl innen als auch außen mit der Hartstoffschicht versehen.

Aus der DE-A-3 806 699 ist ein Verfahren zum Beschichten von Haushaltsgegenständen bekannt, bei welchem der metallische Grundkörper zunächst mit einer Haftgrundschicht z.B. aus Nickel-Aluminium oder Chrom-Nickel versehen wird. Auf die Haftgrundschicht wird eine Hartstoffschicht, z.B. aus Aluminiumoxid oder einer Mischung aus Aluminiumoxid und Titanoxid aufgetragen. Danach wird die Hartstoffschicht mit einer Antihaftschicht, z.B. auf Polytetrafluorethylen (PTFE)-Basis versehen. Die jeweiligen Schichten werden dabei jeweils auf die Bratoberfläche aufgesprüht. Bei diesem Verfahren soll gegenüber bis dahin bekannten Beschichtungsverfahren die optische Qualität der Oberfläche erhalten bleiben und gleichzeitig die Belastbarkeit der Schicht noch weiter erhöht werden.

Aus der DE-C-3 604 762 ist ebenfalls nur ein Verfahren zum Beschichten von Küchengefäßen bekannt, bei welchem die Oberfläche zunächst im Plasma-Sprühverfahren mit einer Haftgrundschicht aus Nickel-Aluminium oder Chrom-Nickel versehen, alsdann im Plasmasprühverfahren auf die Haftgrundschicht eine Hartstoffschicht aus Aluminiumoxid oder Aluminiumoxid/Titanoxid aufgetragen, weiterhin auf die Haftstoffschicht einer Antihaftschicht aufgebracht und schließlich die Antihaftschicht eingebrannt wird. Die Haftgrundschicht besteht aus Nickel-Aluminium oder Chrom-Nickel. Auch hier werden die erforderlichen Schichten lediglich auf die beanspruchte Oberfläche, also bspw. auf die Bratinnenfläche einer Pfanne, aufgesprüht. Bei diesem Verfahren soll gegenüber bis dahin bekannten Beschichtungsverfahren die Aufgabe gelöst werden, eine verbesserte Haftung der Antihaftschicht auf der Oberfläche des Küchengefäßes zu erreichen.

Aufgabe der vorliegenden Erfindung ist es, ein Verfahren der eingangs genannten Art so auszugestalten, daß es wirtschaftlicher ausfuhrbar ist.

Diese Aufgabe wird mit der Erfindung bei einem Verfahren der eingangs genannten Art mit den Merkmalen des Anspruchs 1 gelöst.

Hierdurch werden die Verfahrenskosten verringert, da bspw. bei der anodischen Oxidation trotz des Eintauchens des Geschirrgegenstandes in das Elektrolytbad nur noch ein geringerer Flächenanteil mit der Anodisationsschicht zu versehen ist. Die beständige Oberflächenschicht dient nicht nur dieser Einsparung, sondern weist gleichzeitig bestimmte funktionelle Eigenschaften auf, sie bildet nämlich aufgrund geeigneter Materialwahl eine beständige Schutz-, Abdeck-, Dekorations- und/oder Trägerschicht für eine weitere (abschließende) Abdeckschicht. Dabei kann die Oberflächenschicht, abgesehen davon, daß sie einem dekorativen Zweck dienen kann, auf einen speziellen funktionellen Zweck ausgelegt sein, d.h. bspw. die Verschleißbeständigkeit, die Kratzfestigkeit, den Korrosionsschutz oder die Wärmeleitfähigkeit (am Boden) unabhängig von dem auf der Innenseite des Geschirrgegenstandes vorzusehenden Beschichtungssystems verbessern.

Als Oberflächenschicht kommen nach der Erfindung in erster Linie Antihaftlacksysteme, Emaillierung und/oder sonstige säurebeständige organische und/oder anorganische Beschichtungen in Frage. Werden bspw. fluorkohlenstoffhaltige Beschichtungssysteme als Oberflächenschicht verwendet, so können diese ein-, zwei- oder mehrschichtig, mit oder ohne Zwischentrocknung/Zwischenbrand aufgebracht sein. Auch die Emaillierung kann ein- oder mehrschichtig mit oder ohne Zwischentrocknung/Zwischenbrand aufgebracht sein, um eine optimale Säurebeständigkeit zu erreichen. Die sonstigen säurebständigen organischen oder anorganischen Beschichtungen können auf Dünn- oder Dickschichtbasis mit dekorativen und/oder funktionellen Eigenschaften beruhen.

Vorteilhafterweise wird man die Oberflächenschicht auf der gesamten Außenseite des Geschirrgegenstandes aufbringen, so daß wegen einer Verringerung des mit der Anodisationsschicht zu versehenen Flächenanteils auf etwa die Hälfte die Kosten erheblich reduziert werden können.

## Patentansprüche

1. Verfahren zur Ausstattung eines Geschirrgegenstandes aus Metall mit einem Antihaftbeschichtungssystem auf den beanspruchten Oberflächenbereichen, welches eine Hartstoffschicht und eine Antihaftschicht aufweist, indem man vor dem Vorsehen der Hartstoffschicht eine Oberflächenschicht auf die nicht mit dem Antihaftbeschichtungssystem zu versehenden Oberflächenbereiche des Geschirrgegenstandes aufbringt, dann die Hartstoffschicht als anodisch erzeugte Konversionsschicht auf den nicht mit der Oberflächenschicht versehenen Oberflächenbereichen des Geschirrgegenstandes vorsieht, und dann die Antihaftschicht auf der Hartstoffschicht vorsieht, **dadurch gekennzeichnet**, daß man die Oberflächenschicht auf den nicht mit dem Antihaftbeschichtungssystem versehenen Oberflächenbereichen des Geschirrgegenstandes als beständige Schutzschicht oder beständige Abdeckschicht oder beständige Dekorationsschicht und/oder als beständige Trägerschicht für eine weitere Abdeckschicht ausbildet.

2. Verfahren nach Anspruch 1, **dadurch gekennzeichnet**, daß man die Oberflächenschicht aus einem Antihaftlacksystem, durch Emaillierung und/oder als sonstige säurebeständige organische und/oder anorganische Beschichtung ausbildet.

3. Verfahren nach einem der Ansprüche 1 oder 2, **dadurch gekennzeichnet**, daß man die Oberflächenschicht auf der gesamten Außenseite des Geschirrgegenstandes anbringt.

## Claims

1. Process for applying to the surface areas under stress of a metal cooking utensil a non-stick coating system which has a hard substance layer and a non-stick layer, where before applying the hard substance layer a surface coating is applied to the surface areas of the cooking utensil which are not to be coated with the non-stick coating system, then the hard substance layer is applied as an anodic generated conversion coating to the surface areas of the cooking utensil not carrying the surface coating, and then the non-stick layer is placed on the hard substance layer, characterised in that the surface coating is formed on the surface areas of the cooking utensil not coated with the non-stick coating system as a constant protective coating or constant covering coating or constant decoration coating and/or as a constant carrier coating for a further covering coating.

2. Process according to claim 1, characterised in that the surface coating is formed from a non-stick lacquer system, by enamelling and/or as other acid resistant organic and/or anorganic coating.

3. Process according to any of claims 1 or 2, characterised in that the surface coating is applied to the entire outside of the cooking utensil.

## Revendications

1. Procédé pour réaliser, sur les parties de surface exposées d'un ustensile de cuisine en métal, un système de revêtement anti-adhésif comportant une couche de matériau dur et une couche anti-adhésive, consistant en ce que, avant de réaliser la couche de matériau dur, on applique une couche superficielle sur les parties de surface de l'ustensile de cuisine qui ne doivent pas être couvertes par le système de revêtement anti-adhésif, en ce qu'on applique la couche de matériau dur sous forme de couche de conversion anodique sur les parties de surface de l'ustensile de cuisine qui ne comportent pas de couche superficielle et en ce qu'on applique la couche anti-adhésive sur la couche de matériau dur, caractérisé par le fait que l'on forme la couche superficielle sur les parties de surface de l'ustensile de cuisine non pourvues du système de revêtement anti-adhésif sous forme de couche de protection durable ou de couche de couverture durable ou de couche de décoration durable et/ou de couche support durable pour une couche de couverture supplémentaire.

2. Procédé selon la revendication 1, caractérisé par le fait que l'on forme la couche superficielle à partir d'un système de peinture anti-adhésive, par émaillage et/ou sous forme de revêtement autre organique et/ou minéral résistant aux acides.

3. Procédé selon la revendication 1 ou 2, caractérisé par le fait que l'on applique la couche superficielle sur toute la face extérieure de l'ustensile de cuisine.
